(19) Europäisches Patentamt
European Patent Office
Office européen des brevets

(11) Publication number: **0 027 312**
**B1**

(12) # EUROPEAN PATENT SPECIFICATION

(45) Date of publication of patent specification: **21.03.84**

(51) Int. Cl.³: **C 08 L 25/16**, C 08 L 53/02

(21) Application number: **80303070.9**

(22) Date of filing: **03.09.80**

(54) **Blends of poly (p-methylstyrene) and a block copolymer of styrene and a conjugated diolefin.**

(30) Priority: **24.09.79 US 77975**

(43) Date of publication of application:
**22.04.81 Bulletin 81/16**

(45) Publication of the grant of the patent:
**21.03.84 Bulletin 84/12**

(84) Designated Contracting States:
**BE DE FR GB IT NL**

(56) References cited:
**EP - A - 0 013 139**
**GB - A - 1 092 563**
**GB - A - 1 328 446**
**GB - A - 1 363 466**
**GB - A - 1 389 879**

(73) Proprietor: **MOBIL OIL CORPORATION**
**150 East 42nd Street**
**New York New York 10017 (US)**

(72) Inventor: **Sherman, Anthony Michael**
**117 Stephenville Parkway**
**Edison, New Jersey (US)**

(74) Representative: **West, Alan Harry et al,**
**Mobil Court 3 Clements Inn**
**London WC2A 2EB (GB)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 027 312 B1

# Blends of poly(p-methylstyrene) and a block copolymer of styrene and a conjugated diolefin

This invention is concerned with blends of poly(p-methylstyrene) and certain styrene-butadiene block copolymers, which have good optical clarity.

British Patent No. 1,092,563 discloses a thermoplastic elastomeric composition comprising a block copolymer having the general formula A—B—A in which each A is an independently selected polymer block of a vinyl substituted aromatic hydrocarbon, such as styrene, and B is a polymer block of a conjugated diene hydrocarbon, such as butadiene, with the A blocks jointly constituting 23 to 35% by weight of the block copolymer, and 5—200 parts by weight per 100 parts by weight of said block copolymer of a polymer of a vinyl substituted aromatic hydrocarbon, such as polystyrene or poly(vinyltoluene).

The present invention resides in a blend of polymethyl styrene and a styrene-conjugated diolefin block copolymer, characterized in that the polymethyl styrene is poly(p-methylstyrene), the block copolymer contains from 60—80 weight percent styrene, and the weight ratio of poly(p-methylstyrene) to the styrene-conjugated diolefin block copolymer is from 70:30 to 40:60.

The monomer used in preparing the homopolymer from which the blends of this invention are made is p-methylstyrene. Mixtures of methylstyrene isomers which are rich in p-methylstyrene may be used in place of pure p-methylstyrene. Suitable mixtures contain at least 95 weight percent, preferably 97—99 weight percent, p-methylstyrene and less than 0.1 weight percent o-methylstyrene with the balance being m-methylstyrene. A typical mixture contains, by weight, about 97 percent p-methylstyrene, about 3 percent m-methylstyrene, and about 0.05 percent o-methylstyrene. The mixtures are obtained by catalytic dehydrogenation of the mixtures of ethyltoluene isomers described in U.S. Patent No. 4,086,287. The monomer mixtures and the p-methylstyrene polymers are disclosed in our German Patent Application No. 2821589 and our European Patent Application No. 79300076 (Publication No. 3639).

The polymers used in the present blends are the homopolymers of p-methylstyrene or the p-methylstyrene-rich isomer mixture. The polymerization reaction is carried out by using methods and catalysts well known in the art for polymerizing styrene and as described in European Publn. No. 3639. The reaction can be carried out in solution, bulk, suspension, or emulsion.

The styrene/diene block copolymers which are employed in the present blends contain polymer blocks of styrene interspersed with polymer blocks of a conjugated diene. Hydrogenated derivatives of such block copolymers may also be employed. The conjugated dienes preferably have from 4—8 carbon atoms per molecule and still more preferably 4 or 5. Thus, the preferred species are butadiene and isoprene, although methylisoprene and other conjugated dienes may be utilized, as well as mixtures thereof. Hence, the preferred block copolymers are polystyrene; polybutadiene-polystyrene and polystyrene- polyisoprene-polystyrene, as well as hydrogenated derivatives of these polymers.

The block copolymers may be hydrogenated to any desired extent, although the substantially complete hydrogenation of at least the conjugated diene polymer block is desirable. In any event, if hydrogenation is resorted too, it is desired to reduce the original unsaturation of the block copolymer by at least about 50 and preferably by at least about 90%. The reasons for hydrogenation are broadly two-fold in that hydrogenation increases the stability of the product as well as raising its softening point.

The block copolymer will contain from 60 to 80 weight percent styrene, the balance being conjugated diolefin.

The block copolymer may be of the A—B, A—B—A or sequential A—B—A—B—A types. The preparation of a typical ABA block copolymer is illustrated by a styrene-isoprene-styrene block copolymer. The first polymer block comprising polystyrene terminated with lithium is formed by the introduction of styrene, cyclohexane (as solvent), and secondary butyl lithium into the polymerization zone. After formation of the first polymer block, the elastomeric polymer block is formed by introduction of isoprene into the reaction mixture, preferably together with further solvent. Refluxing may be used for temperature control. This results in the formation of an intermediate block copolymer comprising a first block of polystyrene and a second block of polyisoprene terminated with lithium. More styrene may then be added to the reaction mixture and polymerization continued to form the three polymer blocks A—B—A, still terminated with lithium. The lithium may be removed in the final stage of the process by the addition of a chain terminator such as an alcohol.

The preferred catalysts to be used in the process of preparing the block copolymers comprise alkali metal alkyls such as the alkyl lithium compounds, these may be secondary or tertiary alkyls, with the general configuration:

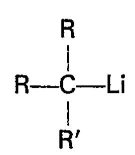

where each R is an alkyl radical and R′ is

hydrogen or alkyl. They include particularly secondary butyl lithium, tertiary butyl lithium, secondary amyl lithium, tertiary amyl lithium, secondary hexyl lithium, tertiary hexyl lithium and other alkyl lithium compounds preferably having from 4 to 8 carbon atoms per molecule.

The proportion of initiator taking an active part in the block copolymerization will normally be from 100 to 2000 parts per million, based on the weight of the total monomers used.

Polymerization is usually conducted at temperatures from −20° to about 100°C, preferably at temperatures between 20 and 65°C. The temperature is controlled to yield the polymer product within a reasonable length of time at the initiator level being utilized.

The conditions of polymerization are adjusted so as to produce a first polymeric block having an average molecular weight between about 2,000 and 100,000. Having formed this first polymer block, the next stage in the process comprises addition of the second type of monomer, in this illustrative instance being a conjugated diene, such as one of those enumerated above. The proportion of monomer, assuming substantially complete polymerization thereof, will be sufficient to form a polymer block having an average molecular weight between about 25,000 and 1 million. Since, under the conditions of the process, the first polymer block is a "living polymer chain" terminated with a lithium radical, the block polymerization proceeds at the end of each of these living chains to form an intermediate two-block polymer having the structure A—B—Li. After completion of the second polymer block, the terminal polymer block will be formed by introduction of the same or a different alkenyl-substituted aromatic hydrocarbon such as styrene. Again, this block copolymerizes with the living polymer chains and results under the conditions employed in the formation of a living three-block polymer having the general configuration A—B—A—Li. The lithium is deactivated and the polymerization terminated by the injection at this point of a suitable chain terminator such as an alcohol, $H_2O$ or other known agents for this purpose.

Block copolymerization is preferably conducted in the presence of solvents. These must be chosen with some care for two principal reasons: if the block copolymer becomes insoluble at any stage in its preparation in the selected solvent the chain growth may become slow and non-uniform because the monomer is rendered inaccessible to the growing chains at that point, this results in broad molecular weight distributions both for the block in question and for the next block to form on it. Solvents may also be selected for controlling the temperature during polymerization by reflux.

When the block copolymer being formed is one in which the two terminal blocks are polystyrene blocks, it is preferable to employ a cyclic hydrocarbon, which may be either a cycloaliphatic such as cyclohexane or a member of the benzene series such as benzene or toluene. The former type namely, cycloaliphatic hydrocarbon, is preferred since such materials are more easily purified. Mere traces of certain impurities such as acetylenic impurities may have powerful deleterious effects upon the continuance of polymerization in the presence of the extremely small proportions of catalyst required.

The weight ratio of poly(p-methylstyrene) to the styrene conjugated diolefin block copolymer in the blend is from 70:30 to 40:60, preferably about 50:50. Blending of the components may be effected by any suitable procedure including mixing in a Brabender (trade mark) mixer, extruder mixing, and mixing in a 2-roll differential speed mixer.

Example 1

A blend of 25 g pellets of poly(p-methylstyrene) and 25 g pellets of ABA block copolymer (styrene-butadiene-styrene linear block copolymer containing, by weight, 70% styrene and 30% butadiene, m.w. 140,000) was prepared by tumbling the pellets to mix them. They were then fed into the head of a Brabender (trade mark) mixer. Blending conditions were 75 r.p.m. at 180°C for 10 min. The sample was removed and cut into strips for molding. Test specimens were prepared by compression molding at 200°C for 12 min under 133 kN ram force on a 30 cm square mold to a thickness of 50 $\mu$m.

Example 2

Example 1 was repeated except that commercial general purpose polystyrene was used instead of poly(p-methylstyrene).

The molded samples were tested for physical properties. Test results are set forth in the following table.

TABLE

| Property | Example 1 | Example 2 |
|---|---|---|
| Light transmission, % | 87.3 | 68.4 |
| Haze, % | 18.5 | 32.1 |
| Melt index(G), g/10 min | 5.33 | 9.62 |
| Hardness, Shore D | 70 | 71.5 |
| Vicat softening pt., °C | 91 | 84 |
| Flexural modulus, kPa | $12.41\times10^5$ | $12.41\times10^5$ |

From the data in the Table, it will be noted that the physical properties of the two blends were generally similar. Unexpectedly, however, the optical properties of the blend containing poly(p-methylstyrene) are extremely better, with higher light transmission and lower haze. These properties render the blends of this invention useful in packaging wherein the packaged article must be clearly visible, such as bags, overwrapping, e.g., produce packaging, and blister packaging.

**Claims**

1. A blend of polymethylstyrene and a styrene-conjugated diolefin block copolymer, characterized in that the polymethylstyrene is poly(p-methylstyrene), the block copolymer contains from 60—80 weight percent styrene, and the weight ratio of poly(p-methylstyrene) to the styrene-conjugated diolefin block copolymer is from 70:30 to 40:60.

2. A blend according to Claim 1, wherein the conjugated diolefin is butadiene.

3. A blend according to Claim 2, wherein the block copolymer is an ABA styrene-butadiene-styrene linear block copolymer containing about 70 weight percent styrene and having a molecular weight of about 140,000; the weight ratio of the poly(p-methylstyrene) to the block copolymer being about 50:50.

**Patentansprüche**

1. Eine Mischung aus Polymethylstyrol und einem Block-Copolymeren aus Styrol und einem konjugierten Diolefin, dadurch gekennzeichnet, daß das Polymethylstyrol Poly(p-methylstyrol) ist, das Block-Copolymere von 60 bis 80 Gew.-% Styrol enthält, und daß das Gewichtsverhältnis des Poly(p-methylstyrols) zu dem Block-Copolymeren aus Styrol und einem konjugierten Diolefin von 70:30 bis 40:60 beträgt.

2. Eine Mischung nach Anspruch 1, bei dem das konjugierte Diolefin Butadien ist.

3. Eine Mischung nach Anspruch 2, bei dem das Block-Copolymere ein lineares Block-Copolymeres ABA Styrol-Butadien-Styrol ist, das etwa 70 Gew.-% Styrol enthält und ein Molekulargewicht von etwa 140 000 aufweist, wobei das Gewichtsverhältnis des Poly(p-methylstyrols) zu dem Block-Copolymeren etwa 50:50 beträgt.

**Revendications**

1. Un mélange de polyméthylstyrène et d'un copolymère séquencé de styrène-dioléfine conjuguée, caractérisé en ce que le polyméthylstyrène est le poly(p-méthylstyrène), le copolymère séquencé contient de 60 à 80% en poids de styrène et le rapport pondéral du poly(p-méthylstyrène) au copolymère séquencé de styrène-dioléfine conjuguée est de 70/30 à 40/60.

2. Un mélange selon la revendication 1, dans lequel la dioléfine conjuguée est le butadiène.

3. Un mélange selon la revendication 2, dans lequel le copolymère séquencé est un copolymère séquencé linéaire styrène-butadiène-styrène ABA contenant environ 70% en poids de styrène et ayant un poids moléculaire d'environ 140 000; le rapport pondéral du poly(p-méthylstyrène) au copolymère séquencé étant d'environ 50/50.